# EUROPÄISCHE PATENTSCHRIFT

(11) **EP 4 556 202 B1**
(45) Veröffentlichungstag und Bekanntmachung des Hinweises auf die Patenterteilung: **09.09.2026**
(21) Anmeldenummer: 24209676.6
(22) Anmeldetag: 30.10.2024
(51) Int. Cl.: B29C 65/18, B29C 65/30, B29C 65/60, B33Y 80/00

(54) **VORRICHTUNG ZUM HEISSVERNIETEN EINES THERMOPLASTISCHEN VERBINDUNGSELEMENTS**
DEVICE FOR THE HOT RIVETING OF A THERMOPLASTIC JOINING ELEMENT
DISPOSITIF DE RIVETAGE À CHAUD D'UN ÉLÉMENT DE LIAISON THERMOPLASTIQUE

(30) Priorität: 20.11.2023 DE 102023132219
(43) Veröffentlichungstag der Anmeldung: 21.05.2025
(73) Patentinhaber: bdtronic GmbH, 97990 Weikersheim (DE)
(72) Erfinder: Hellinger, André, 97980 Bad Mergentheim (DE); Kunz, Manuel, 97285 Röttingen (DE); Reiner, Markus, 91465 Ergersheim (DE)
(74) Vertreter: Ellberg, Nils

(56) Entgegenhaltungen:
- EP-A1- 3 506 720
- EP-A2- 2 248 657
- DE-A1- 102006 039 658
- DE-B3- 102004 057 453

## Beschreibung

Die Erfindung betrifft eine Vorrichtung zum Heißvernieten eines thermoplastischen Verbindungselements, gemäß dem Oberbegriff des Anspruchs 1.

Vorrichtungen zum Heißvernieten sind aus der Praxis in zahlreichen Varianten bekannt. Beispielsweise werden Vollmetallstempel verwendet, in die eine oder mehrere Kalotten als Formelemente gefräst und anschließend poliert werden. Dabei ist das Polieren ein zeitaufwendiger händischer Prozess, der nur schwer prozesssicher umsetzbar und damit teuer ist. Zusätzlich werden die Stempel zur Erhöhung der Standzeit beschichtet, was einen weiteren Kostentreiber darstellt. Da je nach Anwendung und Projekt unterschiedliche Kalotten-Geometrien benötigt werden, gibt es zudem kaum Skaleneffekte durch die Beschaffung höherer Stückzahlen. Darüber hinaus muss mit langen Beschaffungszeiten für die Stempel gerechnet werden.

Aus dem Stand der Technik sind spezifischere Vorrichtungen bekannt. Die Druckschrift D1 (EP 3 506 720 A1) offenbart eine Vorrichtung zum Heißvernieten mit einem Stempel, der ein separates Formelement aufweist. Die Kühlung erfolgt hierbei durch einen Luftstrom, der um das Formelement herumgeleitet wird. Die Druckschrift D2 (EP 2 248 657 A2) zeigt eine Nietkalotte, die aus Keramik bestehen kann und interne Kühlfluidkanäle aufweist. Die Druckschriften D3 (DE 10 2004 057 453 B3) und D4 (DE 10 2006 039 658 A1) offenbaren jeweils Vorrichtungen, bei denen der Stempel bzw. die Nietkalotte zum Heizen in eine separate Heizeinheit gebracht und zum Kühlen wieder von dieser getrennt wird.

Ein prozessrelevantes Problem ist die Wärmeerzeugung an der Kalotte. Diese wird über den elektrischen Widerstand des Stempels an der Kalotte realisiert. Man kann den Widerstand durch die Materialwahl und die Querschnitte beeinflussen. Die Materialwahl unterliegt dabei aber der Einschränkung, dass es sowohl fest genug als auch beschichtbar sein muss. Die Querschnitte des Stempels lassen sich aufgrund der benötigten Stabilität kaum weiter reduzieren. Dadurch wird ein hoher Strom zum Heizen benötigt. Dieser muss mit voluminösen Trafos erzeugt werden und über Kabel mit großem Querschnitt übertragen werden. Beide Punkte sind kosten- und raumintensiv.

Hiervon ausgehend liegt der Erfindung die Aufgabe zu Grunde, eine Vorrichtung der eingangs genannten Art weiterzuentwickeln, insbesondere im Hinblick auf die aus dem Stand der Technik bekannten Probleme.

Eine erfindungsgemäße Vorrichtung zum Heißvernieten weist die Merkmale des Anspruchs 1 auf.

Diese Lösung kann insbesondere den Vorteil aufweisen, dass das Formelement als Verschleißteil austauschbar ist. Zudem ist auf diese Weise der Einsatz anderer Materialien für das Formelement auf einfache Weise möglich, was z. B. beim eingangs genannten Vollmetallstempel nicht möglich bzw. auf eine Beschichtung der Kalotte beschränkt war.

Eine Besonderheit besteht ferner darin, dass das Formelement mittels 3D-Druckverfahren aus Keramik gebildet ist.

Hierbei können technische Keramiken zum Einsatz kommen, die vorteilhafte mechanische und chemische Eigenschaften aufweisen, die auf diese Weise zum Einsatz gebracht werden können. Im 3D-Druckverfahren sind zudem alle geometrischen Formen ohne Erhöhung des Fertigungsaufwandes möglich, z. B. Kühlrippen und Kühlkanäle. Ein wesentlicher Vorteil kann aber darin bestehen, dass die im 3D-Druckverfahren hergestellten Formelemente bereits ab einer geringen Stückzahl wirtschaftlich herstellbar sind, so dass kein aufwändiger Beschaffungsprozess durchlaufen werden muss.

In diesem Fall ist vorgesehen, dass das Formelement eingeformte Kühlkanäle und/oder aufgedruckte Kühlrippen aufweist.

Weiterhin ist vorgesehen, dass die Kühlkanäle wenigstens in einem Abschnitt der Form des Formelements folgen und vorzugsweise im Bereich des Abschnitts parallel zu dieser verlaufen.

Eine weitere Besonderheit besteht darin, dass die Kühlkanäle in einer Mantelfläche des Formelements münden, und dass unterhalb der Mündungen ein vorzugsweise umlaufender Kragen ausgebildet ist, der gegenüber der Mantelfläche des Formelements vorsteht.

Vorzugsweise ist vorgesehen, dass das Formelement dazu eingerichtet ist, mit einem Verbindungselement in Kontakt gebracht zu werden, um das Verbindungselement zu verformen. Mit anderen Worten dient in diesem Fall (nur) das Formelement des Stempels zur Formung des Verbindungselements.

Ferner kann vorgesehen sein, dass das Formelement dazu eingerichtet ist, am Stempel befestigt zu werden, insbesondere an einer Fassung des Stempels.

Vorzugsweise ist vorgesehen, dass das Formelement dazu eingerichtet ist, lösbar am Stempel befestigt zu werden.

Dies kann beispielsweise dadurch erfolgen, dass das Formelement dazu eingerichtet ist, durch ein Verbindungsmittel, beispielsweise ein Gewinde, oder durch ein Befestigungsmittel mit dem Stempel verbunden zu werden. Alternativ kann das Formelement auch mit dem Stempel verklebt sein.

Je nach Art des zum Einsatz kommenden Klebstoffes kann eine dauerhafte oder lösbare Verbindung erfolgen. Ein Austausch des Formelements kann z. B. durch entsprechende Krafteinwirkung möglich sein oder durch geeignete (chemische) Lösungsmittel.

Denkbar ist natürlich auch die Kombination einer Verklebung mit einer der genannten anderen Befestigungsmöglichkeiten.

Weiterhin kann vorgesehen sein, dass das Formelement dazu eingerichtet ist, an einem unteren Ende des Stempels positionierbar zu sein, insbesondere als dem Stempel zugeordnete, nach unten weisende Spitze.

Insbesondere kann vorgesehen sein, dass die Vorrichtung dazu eingerichtet ist, das Formelement über den Stempel indirekt zu beheizen. Alternativ kann vorgesehen sein, dass die Vorrichtung dazu eingerichtet ist, das Formelement direkt zu beheizen.

Eine weitere Besonderheit kann darin bestehen, dass eine Steuerung der Vorrichtung dazu eingerichtet ist, auf Basis des temperaturabhängigen Widerstands des Formelements auf die Temperatur desselben zu schließen.

Auf diese Weise kann auf ein Thermoelement zur Messung der Temperatur des Formelements verzichtet werden.

Bevorzugte Ausführungsbeispiele werden nachfolgend anhand der Zeichnung beschrieben, wobei nur das Ausführungsbeispiel gemäß Fig. 23 bis 25 sich auf die Erfindung bezieht. Es zeigt:
- Fig. 1 bis Fig. 3: eine schematische Darstellung eines Heißnietverfahrens in einer Seitenansicht,
- Fig. 4: die Heißnietvorrichtung gemäß Fig. 3 in räumlicher Darstellung,
- Fig. 5: ein erstes Ausführungsbeispiel in einer Frontalansicht mit teilweiser Schnittdarstellung,
- Fig. 6: eine Seitenansicht des ersten Ausführungsbeispiels,
- Fig. 7: eine räumliche Darstellung des ersten Ausführungsbeispiels,
- Fig. 8: ein zweites Ausführungsbeispiel in einer Frontalansicht mit teilweiser Schnittdarstellung,
- Fig. 9: eine Seitenansicht des zweiten Ausführungsbeispiels,
- Fig. 10: eine räumliche Darstellung des zweiten Ausführungsbeispiels,
- Fig. 11: ein drittes Ausführungsbeispiel in einer Frontalansicht mit teilweiser Schnittdarstellung,
- Fig. 12: eine Seitenansicht des dritten Ausführungsbeispiels,
- Fig. 13: eine räumliche Darstellung des dritten Ausführungsbeispiels,
- Fig. 14 bis 21: eine Darstellung von unterschiedlichen Stempelformen,
- Fig. 22: ein viertes Ausführungsbeispiel in einer Frontalansicht mit teilweiser Schnittdarstellung,
- Fig. 23: eine Einzelheit des vierten Ausführungsbeispiels in vergrößerter Darstellung,
- Fig. 24: eine Seitenansicht des vierten Ausführungsbeispiels, und
- Fig. 25: eine räumliche Darstellung des vierten Ausführungsbeispiels.

Die in den Zeichnungen gezeigte Vorrichtung dient dem Heißvernieten von thermoplastischen Verbindungselementen 10. Sie verfügt über eine Heizeinrichtung und einen Stempel 11, um das thermoplastische Material zu vernieten.

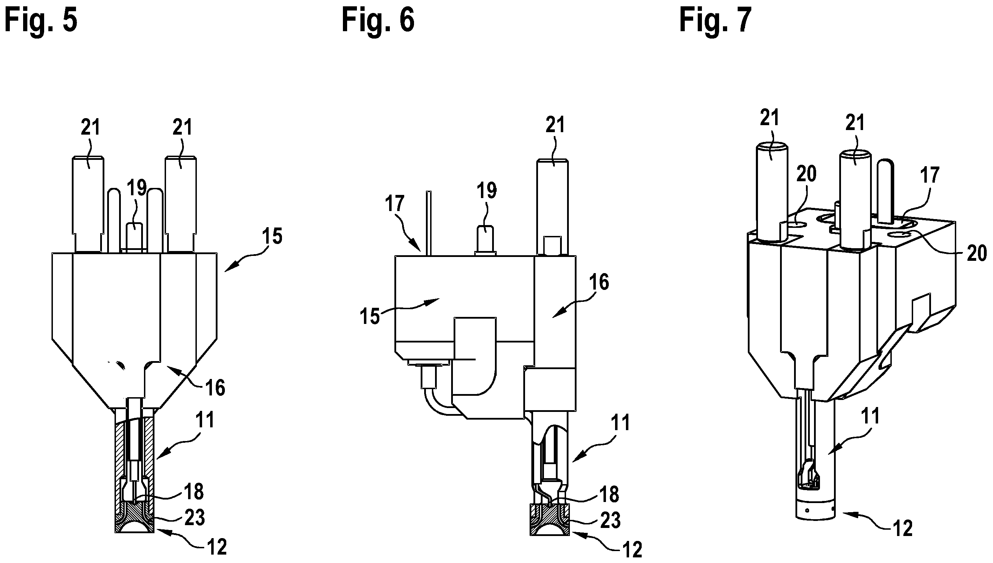

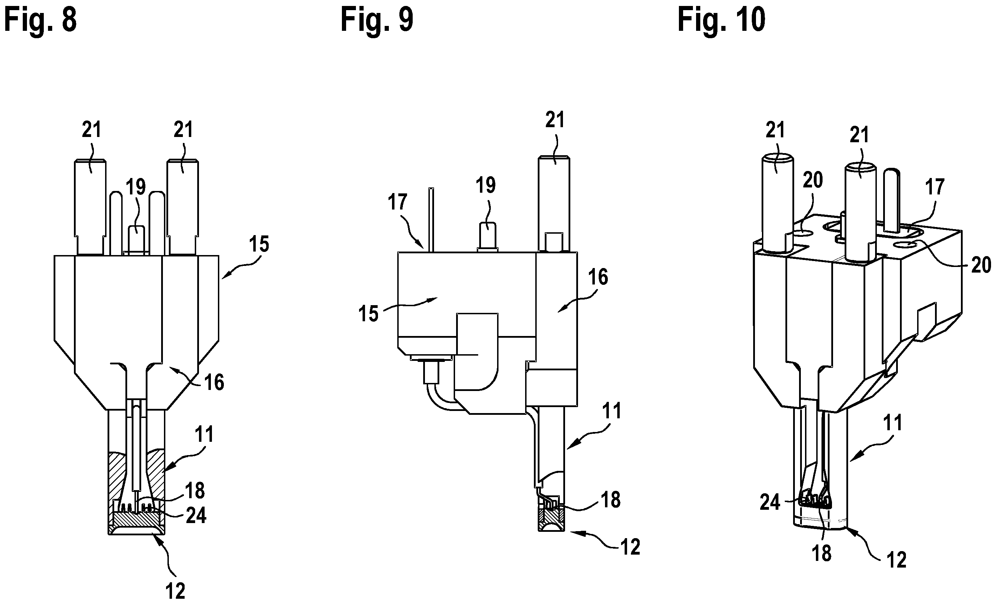

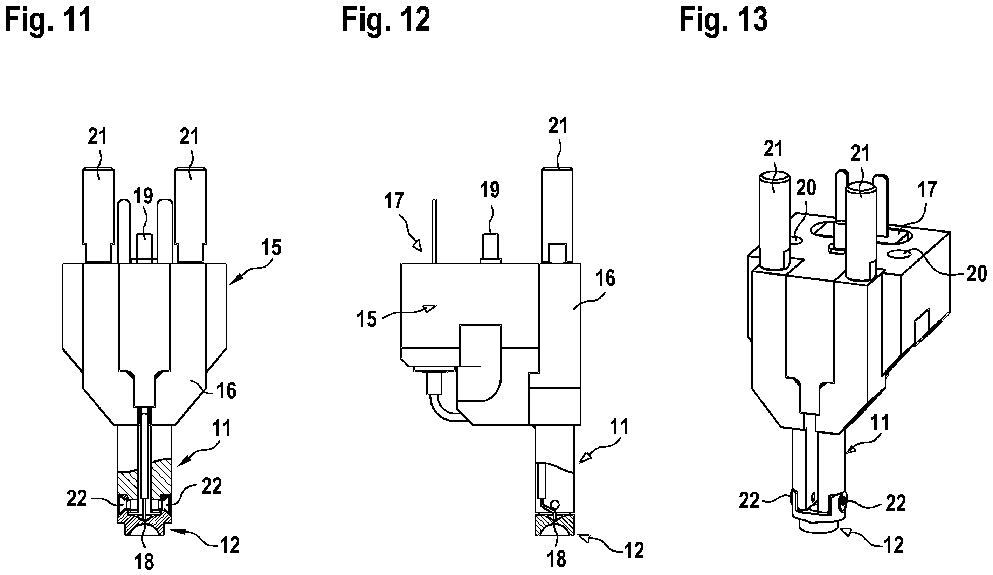

Die Aufgabe der Heizeinrichtung besteht darin, das Ende des thermoplastischen Verbindungselements 10 auf eine Temperatur zu erhitzen, die ausreicht, um das Material zu erweichen, ohne es zu verbrennen oder zu beschädigen. Im vorliegenden Fall ist zu diesem Zweck vorgesehen, den Stempel 11 mittels Stromfluss zu erhitzen. Dabei wird dann ein Formelement 12 des Stempels 11, welches das Verbindungselement 10 umformt, passiv durch den Stempel 11 erhitzt (Fig. 5 bis 10). Alternativ kann der Stromfluss auch direkt durch das Formelement 12 geleitet werden, sodass dieses direkt erhitzt wird (Fig. 11 bis 13).

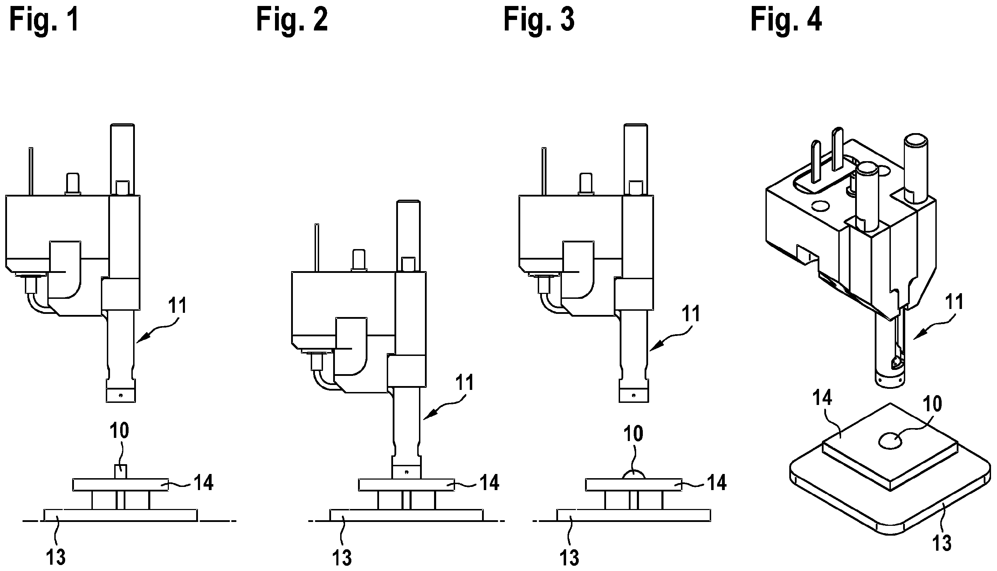

Der Stempel 11 bzw. dessen Formelement 12 übt kontrollierten Druck auf das erhitzte Ende des Verbindungselements 10 aus, um es zu formen oder zu vernieten (Fig. 2). Dies kann über einen pneumatischen, hydraulischen oder mechanischen Aktuator erfolgen, der den Stempel 11 mit dem Formelement 12 gegen das Verbindungselement 10 bewegt. Die Druckkraft und -dauer können einstellbar sein, um unterschiedliche Materialien und Vernietungsanforderungen zu berücksichtigen.

Um eine präzise Ausrichtung des Verbindungselements 10 zu gewährleisten, kann die Vorrichtung über ein Führungssystem verfügen. Dies kann eine Kombination aus mechanischen Führungen, optischen Sensoren oder anderen Positionierungshilfen sein, um eine genaue Platzierung zu garantieren. Ein integriertes Steuerungssystem ermöglicht die Programmierung und Überwachung des Vernietungsprozesses. Es kontrolliert Parameter wie Heiztemperatur, Druckkraft, Druckdauer und Positionierung, um eine gleichbleibende Qualität der Vernietung zu gewährleisten. Abhängig von den spezifischen Anforderungen kann die Vorrichtung mit zusätzlichen Funktionen ausgestattet werden, wie automatisierter Zuführung der Verbindungselemente, integriertem Qualitätssicherungssystem oder Schnittstellen für die Anbindung an andere Produktionssysteme.

Fig. 1 bis 4 zeigen eingangs zur Erläuterung des Heißnietverfahrens die grundsätzliche Vorgehensweise. Dabei sollen zwei Bauteile 13, 14 über ein zu vernietendes Verbindungselement 10 miteinander verbunden werden, welches sich ausgehend vom ersten Bauteil 13 durch eine Öffnung des zweiten Bauteils 14 hindurch erstreckt. Die beiden zu verbindenden Bauteile 13 werden unter dem Stempel 11 positioniert (Fig. 1) und dieser wird danach auf das Verbindungselement 10 abgesenkt (Fig. 2). Durch Beheizung des Stempels 11 bzw. des Formelements 12 wird das Material des Verbindungselements 10 plastifiziert und durch Druck verformt. Danach wird der Stempel 11 wieder angehoben (Fig. 3) und - falls erforderlich - gekühlt.

Fig. 3 bis 13 zeigen drei Ausführungsbeispiele eines Stempels 11 mit einem separaten Formelement 12, welches zum Verformen bzw. Vernieten eines Verbindungselements 10 gegen dieses gepresst wird. Allen Ausführungsbeispielen gemeinsam sind folgende Merkmale:
Das Formelement 12 ist ein separates Bauteil, welches mit dem Stempel 11 verbunden wird. Auf diese Weise kann das Formelement 12 separat ausgetauscht werden. Zudem kann das Material des Formelements 12 sich vom Rest des Stempels 11 unterscheiden.

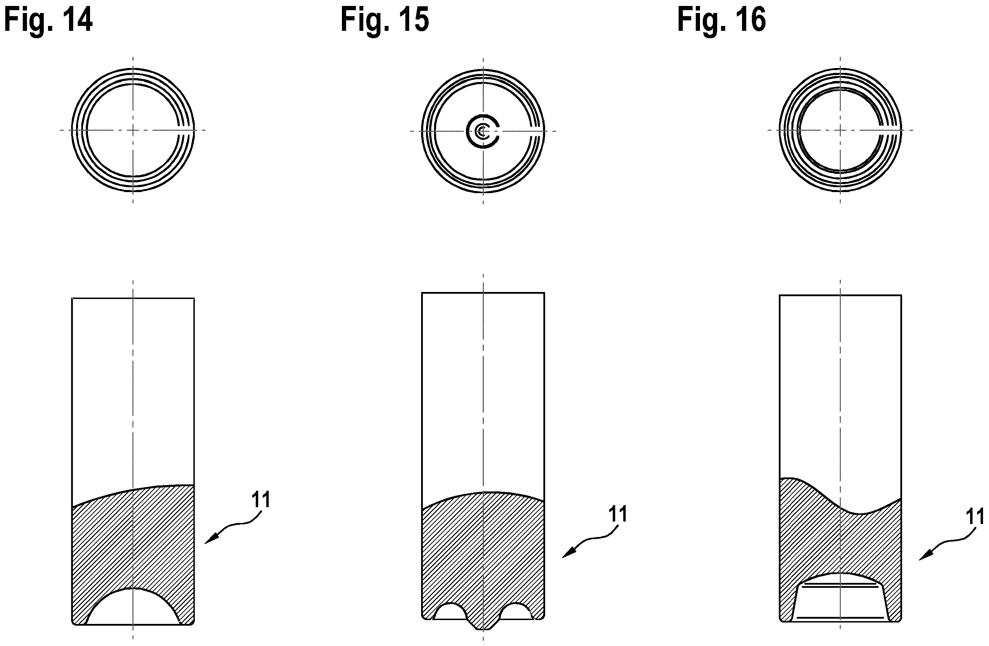

Das separate Formelement 12 ist an der Unterseite des Stempels 11 angeordnet und an seiner Unterseite ausgeformt, um das Verbindungselement 10 beim Vernieten zu formen. Denkbar ist beispielsweise eine in die Unterseite des Formelements 12 eingeformte Kalotte oder beispielsweise eine der anderen Formen gemäß Fig. 14 bis 21. Natürlich sind auch andere aus dem Stand der Technik bekannte Ausformungen denkbar.

Der Stempel 11 ist einem Halter 15 zugeordnet, welcher vorzugsweise aus einem Kunststoff besteht.

Die Temperatur des Formelements 12 wird im Prozess durch ein Thermoelement 17 erfasst, wobei eine Spitze 18 bzw. Ende des Thermoelements 17 das Formelement 12 kontaktiert.

Über einen dem Halter 15 zugeordneten Luftanschluss 19 kann das Formelement 12 im Prozess mit Kaltluft beaufschlagt werden, um das Formelement 12 zu kühlen.

Ferner verfügt der Halter 15 über Positionierhülsen 20, um den Halter 15 und damit den Stempel 11 lösbar dem Aktuator zuzuordnen. Der Halter 15 bildet mit dem Stempel 11 und den Anschlüssen eine austauschbare Einheit, die als Kopf der Vorrichtung zusammen ausgetauscht werden kann. Denkbar ist auf diese Weise auch der Austausch eines herkömmliches Vollmetallstempels durch eine neue Einheit mit austauschbarem Formelement.

Das Formelement 12 ist aus einer technischen Keramik im 3D-Druckverfahren hergestellt. Dies erlaubt es, das Formelement 12 als Verschleiß- bzw. Ersatzteil in Kleinserie kostengünstig herzustellen. Zudem bietet das 3D-Druckverfahren nahe unbegrenzte Möglichkeiten hinsichtlich der Ausformung des Formelements, sodass es insbesondere möglich ist, Kühlkanäle 23, Kühlrippen 24 und dergleichen an- bzw. einzuformen. Zudem lassen sich kleine Bauteile wie die Keramikkalotten bereits bei niedrigsten Stückzahlen wirtschaftlich produzieren. In Versuchen mit schwer zu verarbeitendem Kunststoff und zeitkritischem Prozess hat sich gezeigt, dass Kalotten aus Al₂O₃ ohne Beschichtung bereits eine deutlich höhere Standzeit als Metallstempel mit Beschichtung ermöglichen. Auch das händische Polieren entfällt, da die Oberflächengüte direkt aus dem Drucker ausreichend ist.

Darüber hinaus weist das erste Ausführungsbeispiel folgende Besonderheiten auf:
Zur Verbindung des Formelements 12 mit dem Stempel 11 weist das Formelement 12 ein (Außen-)Gewinde auf, über welches es in ein unteres Ende des Stempels 11 einschraubbar ist. Hierzu kann der Stempel 11 ein entsprechendes (Innen-)Gewinde aufweisen. Zusätzlich kann das Formelement 12 mit dem Stempel 11 durch Verklebung verbunden sein.

Der Stempel 11 verfügt über eine Fassung 16 aus Metall, die über Stromkontakte 21 mit einer Spannung beaufschlagbar ist, sodass die Fassung 16 beheizt werden kann. Auf diese Weise wird indirekt das Formelement 12 beheizt.

Zur Sicherung und besseren Wärmeübertragung kann ein gut wärmeleitfähiger Hochtemperaturklebstoff in das Gewinde eingebracht werden. Da die Keramik als elektrischer Isolator wirkt, steigt der elektrische Widerstand, was eine Reduktion des Stroms ermöglicht. Dadurch sinkt der Aufwand für die Erzeugung und Übertragung des Stroms. Zudem ist man in der Wahl des Materials für den Stempel freier, da dieser nur noch als Heizelement und Fassung für die Kalotte verwendet wird.

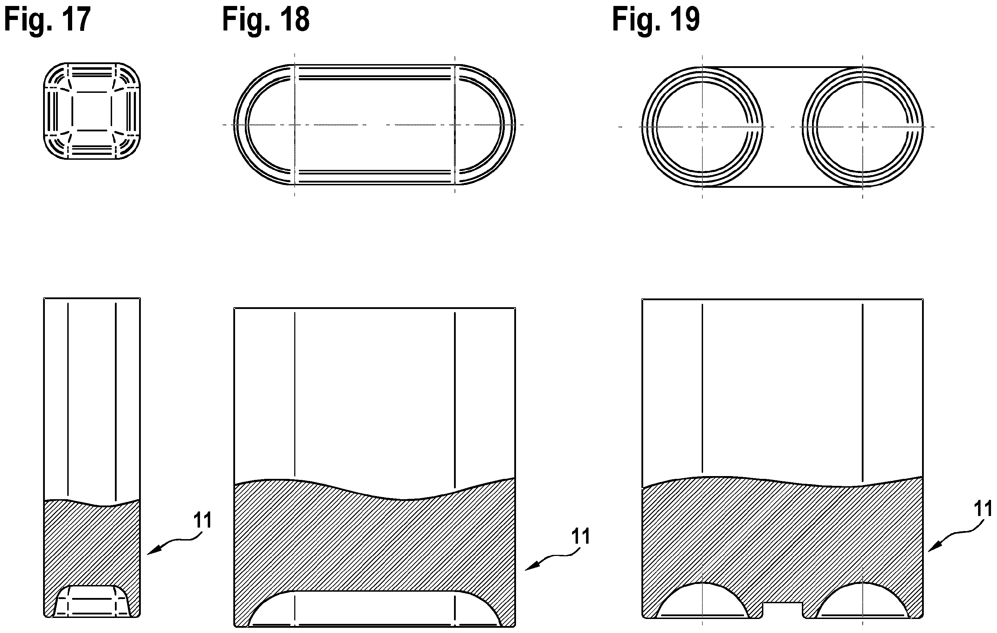

Das zweite Ausführungsbeispiel unterscheidet sich vom vorstehend beschriebenen ersten Ausführungsbeispiel zum einen dadurch, dass kein rotationssymmetrisches Formelement 12 zum Einsatz kommt, sondern ein längliches Formelement, beispielsweise entsprechend des in Fig. 18 gezeigten Stempels 11 für einen Ovalniet.

Das Formelement 12 ist in diesem Ausführungsbeispiel in das untere Ende des Stempels teilweise eingesteckt und dort mit dem Stempel 11 verklebt.

Das dritte Ausführungsbeispiel unterscheidet sich von den beiden vorhergehenden Ausführungsbeispielen dadurch, dass das Formelement 12 direkt durch Stromfluss beheizt ist. Entsprechend führen die Stromanschlüsse 21 bis zum Formelement 12.

Durch additive Fertigungsverfahren, mit denen elektrisch leitfähige und isolierende Keramiken direkt in einem Bauteil verwendet werden können, lassen sich weitere Einsparungen in der elektrischen Aufheizung realisieren. Diese Verfahren sind zwar noch in der Erprobung, sehen aber bereits sehr vielversprechend aus. Zudem könnte man durch den temperaturabhängigen elektrischen Widerstand auf die Temperatur der Kalotte schließen, ohne einen Thermofühler anbinden zu müssen, was den mechanischen und elektrischen Aufwand reduzieren kann.

Ferner ist das Formelement 12 in diesem Ausführungsbeispiel durch Befestigungsmittel, beispielsweise Schrauben 22, an der Fassung 16 befestigt.

In Fig. 14 bis 21 sind zur Erläuterung einige mögliche Formen von Stempeln 11 dargestellt. Es handelt sich dabei jeweils um einen teilweisen Schnitt durch ein unteres Ende eines Stempels 11 sowie um eine darüber dargestellte Ansicht der Unterseite des Stempels 11. Zwecks Vereinfachung wurde auf die Darstellung des Formelements 12 verzichtet. Es zeigt:
- Fig. 14: einen Stempel 11 für einen Vollniet,
- Fig. 15: einen Stempel 11 für einen Hohlniet,
- Fig. 16: einen Stempel 11 für einen Becherniet,
- Fig. 17: einen Stempel 11 für einen Rechteckniet,
- Fig. 18: einen Stempel 11 für einen Ovalniet,
- Fig. 19: einen Doppel-Stempel 11,

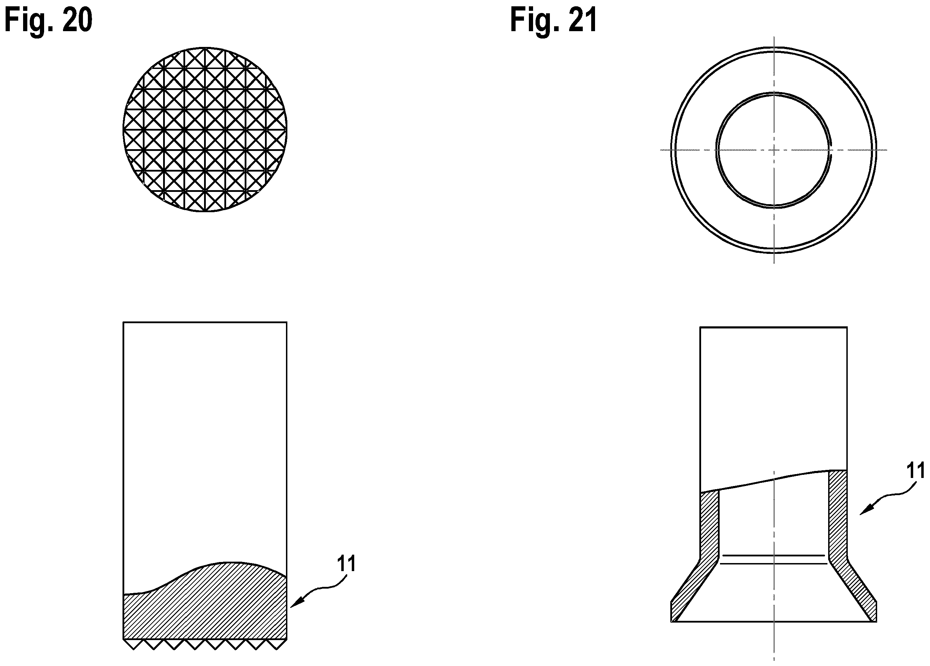

- Fig. 20: einen Waffeleisen-Stempel 11 und
- Fig. 21: einen Stempel 11 zum Einbetten.

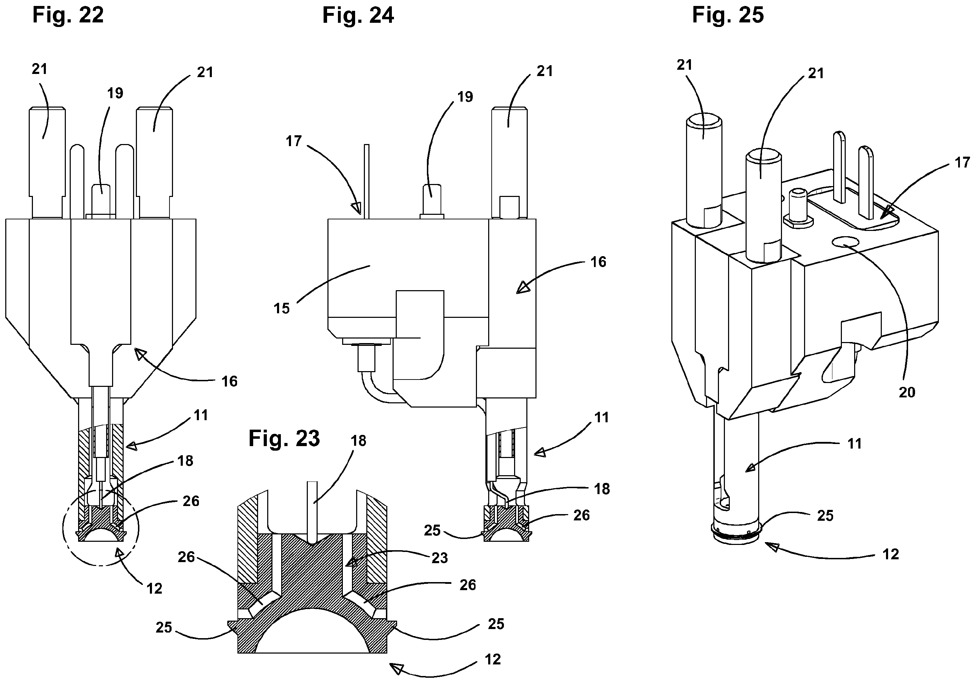

In Fig. 22 bis 25 ist ein viertes Ausführungsbeispiel gezeigt, welches sich vom ersten Ausführungsbeispiel im Wesentlichen durch die folgenden zwei Punkte unterscheidet:
Einerseits ist unterhalb der Mündungen der Kühlkanäle 23 ein vorzugsweise umlaufender Kragen 25 ausgeformt, der gegenüber der Mantelfläche des Formelements 12 vorsteht. Es hat sich gezeigt, dass sich beim Heißvernieten des Verbindungselements 10 überschüssiges Material im Bereich des Formelements 12 ansammelt und mit der Zeit anwächst. Dies kann dazu führen, dass die Austrittspunkte der Kühlkanäle 23 durch das Material verdeckt werden. Durch den Kragen 25 wird diesem Effekt mindestens entgegengewirkt, indem das Material umgelenkt und somit von den Mündungen der Kühlkanäle 23 ferngehalten wird. Es versteht sich, dass der Kragen nicht ohne Unterbrechung umlaufend ausgebildet sein muss, sondern dass auch eine abschnittsweise Anordnung vorzugsweise im Bereich der Mündungen ausreichend sein kann.

Andererseits weisen die Kühlkanäle 23 einen Abschnitt 26 auf, in dem diese der Form der Unterseite des Formelements 12 folgen. Im vorliegenden Fall verlaufen die Kühlkanäle 23 im Abschnitt 26 parallel zum oberen Rand der Kalotte bzw. mit entsprechender Krümmung.

Es versteht sich, dass diese beiden vorstehenden Merkmale auch bei den anderen drei Ausführungsbeispielen zum Einsatz kommen können.

## Patentansprüche

1. Vorrichtung zum Heißvernieten eines thermoplastischen Verbindungselements (10), wobei die Vorrichtung einen Stempel (11) aufweist, der dazu ausgebildet ist, auf das Verbindungselement (10) aufgesetzt zu werden, um das Verbindungselement (10) zu verformen, wobei der Stempel (11) zur Formung des Verbindungselements (10) ein separates Formelement (12) aufweist, welches am Stempel (11) angeordnet ist, wobei das Formelement (12) eingeformte Kühlkanäle (23) und/oder aufgedruckte Kühlrippen (24) aufweist, wobei die Kühlkanäle (23) wenigstens in einem Abschnitt (26) der Form des Formelements (12) folgen und vorzugsweise im Bereich des Abschnitts (26) parallel zu dieser verlaufen, und wobei die Kühlkanäle (23) in einer Mantelfläche des Formelements (12) münden, **dadurch gekennzeichnet, dass** das Formelement im Wesentlichen im 3D-Druckverfahren aus Keramik gebildet ist, und dass unterhalb der Mündungen ein vorzugsweise umlaufender Kragen (25) ausgebildet ist, der gegenüber der Mantelfläche des Formelements (12) vorsteht.

2. Vorrichtung nach Anspruch 1, **dadurch gekennzeichnet, dass** das Formelement (12) dazu eingerichtet ist, mit einem Verbindungselement (10) in Kontakt gebracht zu werden, um das Verbindungselement (10) zu verformen.

3. Vorrichtung nach Anspruch 1 und 2, **dadurch gekennzeichnet, dass** das Formelement (12) dazu eingerichtet ist, am Stempel (11) befestigt zu werden, insbesondere an einer Fassung des Stempels (11), wobei vorzugsweise vorgesehen ist, dass das Formelement (12) dazu eingerichtet ist, lösbar am Stempel (11) befestigt zu werden.

4. Vorrichtung nach Anspruch 3 oder einem der anderen vorhergehenden Ansprüche, **dadurch gekennzeichnet, dass** das Formelement (12) dazu eingerichtet ist, durch ein Gewinde mit dem Stempel (11) verbunden zu werden, insbesondere einer Fassung (16) des Stempels (11) zur Aufnahme des Formelements (12).

5. Vorrichtung nach Anspruch 3, **dadurch gekennzeichnet, dass** das Formelement (12) mit dem Stempel (11) durch Klebung verbunden ist.

6. Vorrichtung nach Anspruch 1 oder einem der anderen vorhergehenden Ansprüche, **dadurch gekennzeichnet, dass** das Formelement (12) dazu eingerichtet ist, an einem unteren Ende des Stempels (11) positionierbar zu sein, nämlich als eine dem Stempel (11) zugeordnete Spitze.

7. Vorrichtung nach Anspruch 1 oder einem der anderen vorhergehenden Ansprüche, **dadurch gekennzeichnet, dass** die Vorrichtung dazu eingerichtet ist, das Formelement (12) über den Stempel (11) indirekt zu beheizen, insbesondere durch Beaufschlagung einer Fassung (16) des Stempels (11) zur Aufnahme des Formelements (12) mit einer Spannung.

8. Vorrichtung nach einem der vorhergehenden Ansprüche 1 bis 6, **dadurch gekennzeichnet, dass** die Vorrichtung dazu eingerichtet ist, das Formelement (12) direkt zu beheizen.

9. Vorrichtung nach Anspruch 1 oder einem der anderen vorhergehenden Ansprüche, **dadurch gekennzeichnet, dass** eine Steuerung der Vorrichtung dazu eingerichtet ist, auf Basis des temperaturabhängigen Widerstands des Formelements (12) auf die Temperatur desselben zu schließen.

10. Vorrichtung nach einem der vorhergehenden Ansprüche, **dadurch gekennzeichnet, dass** die Kühlkanäle (23) im Bereich des Abschnitts (26) parallel zur Form der Unterseite des Formelements (12) verlaufen.

## Claims

1. Apparatus for heat staking a thermoplastic connecting element (10),
wherein the apparatus has a ram (11) which is configured to be placed onto the connecting element (10) in order to deform the connecting element (10), wherein, for shaping the connecting element (10), the ram (11) has a separate shaping element (12) which is arranged on the ram (11),
wherein the shaping element (12) has incorporated cooling channels (23) and/or printed-on cooling ribs (24), wherein the cooling channels (23) follow the shape of the shaping element (12) at least in one portion (26) and preferably run parallel thereto in the region of the portion (26), and wherein the cooling channels (23) open out into a lateral surface of the shaping element (12), **characterized in that** the shaping element is formed substantially in a 3D printing process from ceramic, and **in that**, below the opening-out points, there is formed a preferably encircling collar (25) which protrudes in relation to the lateral surface of the shaping element (12).

2. Apparatus according to Claim 1, **characterized in that** the shaping element (12) is configured to be brought into contact with a connecting element (10) in order to deform the connecting element (10).

3. Apparatus according to Claims 1 and 2, **characterized in that** the shaping element (12) is configured to be fastened to the ram (11), in particular to a holder of the ram (11), wherein it is preferably provided that the shaping element (12) is configured to be fastened releasably to the ram (11).

4. Apparatus according to Claim 3 or either of the other preceding claims, **characterized in that** the shaping element (12) is configured to be connected by way of a thread to the ram (11), in particular to a holder (16) of the ram (11) for receiving the shaping element (12).

5. Apparatus according to Claim 3, **characterized in that** the shaping element (12) is connected to the ram (11) by way of adhesive bonding.

6. Apparatus according to Claim 1 or one of the other preceding claims, **characterized in that** the shaping element (12) is configured to be positionable at a lower end of the ram (11), specifically as a tip assigned to the ram (11).

7. Apparatus according to Claim 1 or one of the other preceding claims, **characterized in that** the apparatus is configured to heat the shaping element (12) indirectly via the ram (11), in particular by applying a voltage to a holder (16) of the ram (11) for receiving the shaping element (12).

8. Apparatus according to one of preceding Claims 1 to 6, **characterized in that** the apparatus is configured to heat the shaping element (12) directly.

9. Apparatus according to Claim 1 or one of the other preceding claims, **characterized in that** a controller of the apparatus is configured to infer the temperature of the shaping element (12) on the basis of the temperature-dependent resistance thereof.

10. Apparatus according to one of the preceding claims, **characterized in that**, in the region of the portion (26), the cooling channels (23) run parallel to the shape of the bottom side of the shaping element (12).

## Revendications

1. Dispositif de rivetage à chaud d'un élément de liaison thermoplastique (10),
le dispositif comprenant un poinçon (11) conçu pour être placé sur l'élément de liaison (10) afin de déformer l'élément de liaison (10), le poinçon (11) présentant, pour le formage de l'élément de liaison (10), un élément de formage séparé (12), qui est disposé sur le poinçon (11),
l'élément de formage (12) présentant des canaux de refroidissement (23) moulés et/ou des nervures de refroidissement (24) imprimées, les canaux de refroidissement (23) suivant, dans au moins une section (26), la forme de l'élément de formage (12) et s'étendant, de préférence, parallèlement à celle-ci dans la zone de la section (26), les canaux de refroidissement (23) débouchant dans une surface d'enveloppe de l'élément de formage (12), **caractérisé en ce que** l'élément de formage est réalisé essentiellement en céramique selon un procédé d'impression 3D, et **en ce qu'**un collet (25), de préférence périphérique, faisant saillie par rapport à la surface d'enveloppe de l'élément de formage (12), est formé au-dessous des débouchés.

2. Dispositif selon la revendication 1, **caractérisé en ce que** l'élément de formage (12) est conçu pour être mis en contact avec un élément de liaison (10) afin de déformer l'élément de liaison (10).

3. Dispositif selon les revendications 1 et 2, **caractérisé en ce que** l'élément de formage (12) est conçu pour être fixé au poinçon (11), notamment à un logement du poinçon (11), il étant de préférence prévu que l'élément de formage (12) est conçu pour être fixé de manière amovible au poinçon (11).

4. Dispositif selon la revendication 3 ou l'une quelconque des autres revendications précédentes, **caractérisé en ce que** l'élément de formage (12) est conçu pour être relié au poinçon (11) par un filetage, notamment à un logement (16) du poinçon (11) destiné à recevoir l'élément de formage (12).

5. Dispositif selon la revendication 3, **caractérisé en ce que** l'élément de formage (12) est relié au poinçon (11) par collage.

6. Dispositif selon la revendication 1 ou l'une quelconque des autres revendications précédentes, **caractérisé en ce que** l'élément de formage (12) est conçu pour pouvoir être positionné à une extrémité inférieure du poinçon (11), à savoir en tant que pointe associée au poinçon (11).

7. Dispositif selon la revendication 1 ou l'une quelconque des autres revendications précédentes, **caractérisé en ce que** le dispositif est conçu pour chauffer indirectement l'élément de formage (12) par l'intermédiaire du poinçon (11), notamment par application d'une tension à un logement (16) du poinçon (11) destiné à recevoir l'élément de formage (12).

8. Dispositif selon l'une quelconque des revendications 1 à 6, **caractérisé en ce que** le dispositif est conçu pour chauffer directement l'élément de formage (12).

9. Dispositif selon la revendication 1 ou l'une quelconque des autres revendications précédentes, **caractérisé en ce qu'**une commande du dispositif est conçue pour déduire la température de l'élément de formage (12) sur la base de la résistance dépendant de la température de celui-ci.

10. Dispositif selon l'une quelconque des revendications précédentes, **caractérisé en ce que** les canaux de refroidissement (23) s'étendent, dans la zone de la section (26), parallèlement à la forme de la face inférieure de l'élément de formage (12).
